(19) Europäisches Patentamt
European Patent Office
Office européen des brevets

(11) **EP 4 570 467 A1**

(12) **EUROPEAN PATENT APPLICATION**

(43) Date of publication:
**18.06.2025 Bulletin 2025/25**

(21) Application number: **24214730.4**

(22) Date of filing: **22.11.2024**

(51) International Patent Classification (IPC):
***B29C 45/76*** (2006.01)

(52) Cooperative Patent Classification (CPC):
**B29C 45/76; B29C 45/7666;** B29C 2945/76033;
B29C 2945/76525; B29C 2945/76668

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 JP 2023212477**

(71) Applicant: **Nissei Plastic Industrial Co., Ltd.
Hanishina-gun, Nagano-ken 389-0693 (JP)**

(72) Inventors:
• **HAKODA, Takashi**
**Nagano-ken (JP)**

• **KATAOKA, Yusuke**
**Nagano-ken (JP)**
• **OYA, Akio**
**Nagano-ken (JP)**
• **YODA, Junki**
**Nagano-ken (JP)**
• **SAKURADA, Yuichi**
**Nagano-ken (JP)**
• **FUKUDA, Yoshinao**
**Nagano-ken (JP)**
• **KOIZUMI, Hiroshi**
**Nagano-ken (JP)**

(74) Representative: **Haseltine Lake Kempner LLP
Bürkleinstrasse 10
80538 München (DE)**

(54) **HEATING CONTROL METHOD AND HEATING CONTROL APPARATUS FOR INJECTION MOLDING MACHINE**

(57) A heating means 2 which is adaptable to an electric energy which permits a power source voltage expected at an arbitrary place of use is selected and is attached to an injection molding machine M in advance. When the injection molding machine M is installed at the place of use, the power source voltage of a power source Po is obtained, as an actual power source voltage $V_p$, directly or indirectly by a molding machine controller 3 provided in the injection molding machine M, an energization gradient ratio $R_c$ is calculated, as a conversion factor $K_c$, on the basis of the ratio of the actual power source voltage $V_p$ to the rated voltage $V_s$ of the heating means 2 provided in the injection molding machine M, and supply power $P_u$ to the heating means 2 is controlled by a power distribution process of multiplying a controlled variable $C_s$ associated with the heating means 2 by the conversion factor $K_c$.

**EP 4 570 467 A1**

## Description

## Technical Field

The present invention relates to a heating control method and a heating control apparatus for an injection molding machine which are preferably used to adapt the injection molding machine to a power source which supplies electricity to the injection molding machine.

## Background Art

In general, an injection molding machine is installed and used in a molding factory or the like in various regions of the world, including Japan. The voltage of a power source for supplying electric power to the injection molding machine changes depending on the power supply standard in each region, and a voltage within the range of about 200 V to about 480 V has been used. Therefore, when an injection molding machine is manufactured, the injection molding machine is designed to fit the voltage used in the region where the injection molding machine is to be installed; specifically, the rated voltage of a band heater (heating means) attached to a heating cylinder is selected such that, at the time of shipment from the factory, the problem of mismatch with the region where it is to be installed is avoided. However, in actuality, it is not uncommon that the selected rated voltage differs from the voltage of the power source, depending on the usage environment or the like; specially, the selected rated voltage differs from the voltage of the power source of the region where the injection molding machine is actually installed. In the end, in such a case, there arises the problem that the heating means (band heater) attached to the injection molding machine must be replaced, which wastes useless installation time and incurs unnecessary costs.

Meanwhile, there has been proposed a countermeasure on the injection molding machine side. The countermeasure can cope with the case where the supplied voltage differs from the rated voltage of the heating means; specifically, can cope with different power source voltages without replacing the heating means. The present applicant has already proposed a temperature control method for an injection molding machine which can cope with the above-mentioned problem (see Patent Literature 1).

In the case of producing molded products (products) by using an injection molding machine, high-mix, small-lot production is frequently performed, and it is necessary to frequently perform switching of production; that is, it is necessary to frequently switch dies and molding conditions such as heating temperature. An object of the temperature control method disclosed in Patent Literature 1 is to cope with switching of production. Specifically, the disclosed is a temperature control method for an injection molding machine in which a heating means or a cooling means is attached to a portion whose temperature is to be controlled (hereinafter referred to as the temperature controlled portion) so as to heat or cool the portion, and the heating means or the cooling means is controlled such that the temperature of the temperature controlled portion becomes equal to a target temperature set beforehand. In the temperature control method, the temperature control capacity at the time of start-up and the temperature control capacity at the time of molding are set by the supply power supplied to the heating means or the cooling means, and, when the temperature control capacity at the time of start-up is switched to the temperature control capacity at the time of molding, the supply power is reduced by a power distribution process. The power distribution process is performed by a waveform thinning process of partially removing the AC waveform.

## Summary of Invention

## Technical Problem

The above-described temperature control method for an injection molding machine disclosed in Patent Literature 1 has the following problem to be solved.

Namely, each of the temperature control capacities is set by the electric power supplied to the heating means, and switching between the temperature control capacities is performed by the power distribution process of distributing electric power to be supplied; specifically, the waveform thinning process of partially removing the AC waveform. Therefore, the above-described temperature control method has advantages realized by the power distribution process. Namely, it is possible to easily produce (select) each temperature control capacity, and it is unnecessary to use a large-scale voltage transformation means or current transformation means, thereby facilitating control and implementation and reducing the size of the apparatus.

However, the temperature control method cannot cope with the above-described problem which occurs at the time of delivery of the injection molding machine to each region; i.e., the temperature control method cannot cope with external power sources which supply electric power to the injection molding machine and which have different power source voltages. Therefore, heretofore, there has been demand for improvement measures for effectively dealing with this problem.

An object of the present invention is to provide a heating control method and a heating control apparatus for an injection molding machine which have solved the above-mentioned problem present in the background art.

**Solution to Problem**

In order to solve the above-described problem, a heating control method for an injection molding machine according to the present invention adapts an injection molding machine M to a power source Po, which supplies electricity to the injection molding machine M, in the following manner. A heating means 2 which is adaptable to an electric energy which permits a power source voltage expected at an arbitrary place of use is selected and is attached to the injection molding machine M in advance. When the injection molding machine M is installed at the place of use, the power source voltage of the power source Po is obtained, as an actual power source voltage Vp, directly or indirectly by a molding machine controller 3 provided in the injection molding machine M, an energization gradient ratio Rc is calculated, as a conversion factor Kc, on the basis of the ratio of the actual power source voltage Vp to the rated voltage Vs of the heating means 2 provided in the injection molding machine M, and supply power Pu to the heating means 2 is controlled by a power distribution process of multiplying a controlled variable Cs associated with the heating means 2 by the conversion factor Kc.

Also, in order to solve the above-described problem, a heating control apparatus 1 for an injection molding machine according to the present invention adapts the injection molding machine M to a power source Po, which supplies electricity to the injection molding machine M, by the following configuration. Specifically, the heating control apparatus 1 comprises a heating means 2 and a molding machine controller 3. The heating means 2 is selected to be adaptable to an electric energy which permits a power source voltage expected at an arbitrary place of use. The heating means 2 is attached to the injection molding machine M. The molding machine controller 3 includes:

an actual power source voltage obtainment functional section Fd which directly or indirectly obtains, as an actual power source voltage Vp, a power source voltage of the power source Po;
a conversion factor calculation functional section Fc which calculates, as a conversion factor Kc, an energization gradient ratio Rc on the basis of the ratio of the actual power source voltage Vp to a rated voltage Vs of the heating means 2 provided in the injection molding machine M; and
a supply power control functional section Fp having a power distribution process section Fpd which controls supply power Pu to the heating means 2 by a power distribution process of multiplying a controlled variable Cs associated with the heating means 2 by the conversion factor Kc.

In preferred modes of the heating control method according to the present invention, the actual power source voltage Vp may be obtained indirectly from DC voltage Ed in a drive circuit 12 which drives an actuator 11a, etc. included in the injection molding machine M. In addition, the power distribution process may be performed by a waveform thinning process of partially removing the AC waveform W of the power source voltage on the basis of the conversion factor Kc, and this waveform thinning process may be performed by multiplying the controlled variable Cs by the energization gradient ratio Rc. Furthermore, the controlled variable Cs may be a manipulated variable MV in a PID control system C in which predetermined PID constants are set. In preferred modes of the heating control apparatus 1 according to the present invention, the molding machine controller 3 may have a display 13 which displays on its screen at least one of the actual power source voltage Vp, the rated voltage Vs, and the energization gradient ratio Rc, and the molding machine controller 3 may include an output limiter 14 which limits the conversion factor Kc not to exceed 100%. Furthermore, the heating means 2 may include at least one band heater 15n, etc.

**Advantageous Effects of Invention**

The heating control method and the heating control apparatus 1 for the injection molding machine M according to the present invention achieve the following remarkable effects.

(1) The power distribution function of distributing and outputting electric power by the electric power distribution process is used. Therefore, it is possible to yield the advantage effects of the power distribution process; namely, it is unnecessary to use a large-scale voltage transformation means or current transformation means, thereby facilitating control and implementation and reducing the size of the apparatus. In particular, even in a situation where, when the injection molding machine M is delivered to (installed in) any of regions in which various power source voltages are employed, mismatching occurs between the power source voltage of the power source Po and the rated voltage Vs of the heating means 2 provided in the injection molding machine M, the injection molding machine M can be installed without changing the heating means 2 such as the band heaters. Thus, it is possible to avoid the problem of consuming unnecessary installation time and the problem of incurrence of unnecessary costs. In addition, since it is only necessary to select one type of heating means with an appropriate power capacity, it is possible to attain an additional effect of increasing the degree of freedom in design and production, such as enabling stocking of pre-manufactured injection molding machines.

(2) In a preferred mode of the heating control method in which the actual power source voltage Vp is indirectly obtained from the DC voltage Ed in the drive circuit 12 for driving the actuator 11a, etc. included in the injection molding machine M, it is possible to obtain the actual power source voltage Vp without adding a separate voltage detection means, thereby contributing to reduction of cost and reduction of size.

(3) In a preferred mode in which the power distribution process is performed by a waveform thinning process of partially removing the AC waveform W on the basis of the conversion factor Kc, since the AC waveform W can be changed (distributed) by time division processing, the power supplied to the band heater can be easily changed without increasing the complexity and size of the control system.

(4) In a preferred mode in which the manipulated variable MV in the PID control system C in which predetermined PID constants are set is utilized as the controlled variable Cs, since the PID control system C for the temperature during molding can be utilized, stable and reliable control can be performed.

(5) In a preferred mode of the heating control apparatus 1 in which the molding machine controller 3 has the display 13 which displays on its screen at least one of the actual power source voltage Vp, the rated voltage Vs, and the energization gradient ratio Rc, since an operator can visually check the indirectly obtained actual power source voltage Vp, the rated voltage Vs, and the calculated energization gradient ratio Rc, it is possible to easily check without fail whether or not a proper voltage (electric power) is supplied and proper control is performed.

(6) In a preferred mode of the heating control apparatus 1 in which the molding machine controller 3 includes the output limiter 14 which limits the conversion factor Kc not to exceed 100%, since generation of excessively large electric power can be avoided, it is possible to avoid occurrence of problems such as breakage of the band heater, thereby protecting the injection molding machine M, and to contribute to further enhancement of safety and reliability.

(7) In a preferred mode in which the heating means 2 includes at least one band heater 15n, etc., since the heating means 2 can be used for heating control of the heating cylinder, which is the most important heating portion in the injection molding machine M, it is possible to contribute to stabilization of operation of the injection molding machine M and improvement of molding quality.

**Brief Description of Drawings**

Fig. 1 is a flowchart used for describing the processing steps of a heating control method according to a preferred embodiment of the present invention;
Fig. 2 is a schematic view of the entirety of an injection molding machine having a heating control apparatus according to the preferred embodiment of the present invention;
Fig. 3 is a front view of a band heater provided in the injection molding machine;
Fig. 4 is a table showing the relation between rated voltages of the band heaters provided in the injection molding machine and corresponding energization gradient ratios;
Fig. 5 is a schematic circuit diagram of drive circuits of actuators provided in the heating control apparatus;
Fig. 6 is a diagram showing the waveform of current output from a power distribution process section provided in the heating control apparatus;
Fig. 7 is a diagram showing the waveform of current output from a power distribution process section provided in the heating control apparatus in a modified example;
Fig. 8: is a diagram showing a basic setting screen of a display provided in the heating control apparatus; and
Fig. 9: is a block circuit diagram of a PID control system which includes the power distribution process section provided in the heating control apparatus.

**Description of Embodiments**

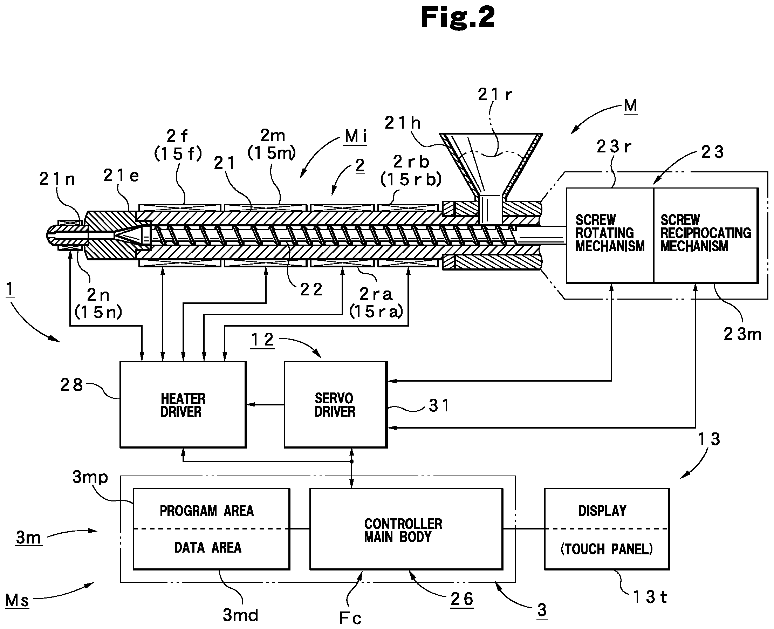

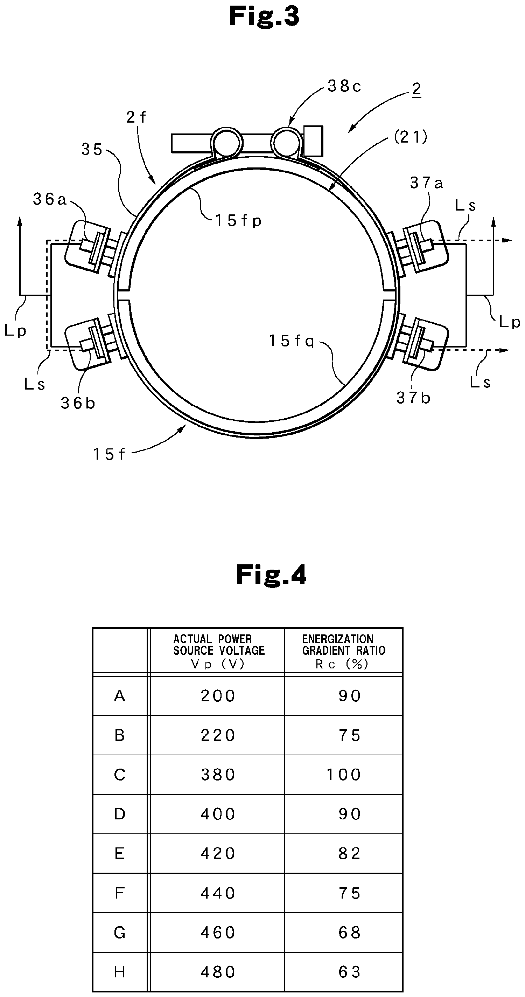

Next, a preferred embodiment of the present invention will be described in detail based on the drawings.
First, the structure of an injection molding machine M which can carry out a heating control method according to the present embodiment will be described with reference to Fig. 2 (Fig. 3, Fig. 8, and Fig. 9).
Fig. 2 shows the injection molding machine M; in particular, Fig. 2 shows an injection machine Mi from which a die (die clamping device) is omitted and shows a drive control system Ms for driving and controlling various actuators of the injection molding machine M.
In the injection machine Mi, reference sign 21 denotes a heating cylinder. An injection nozzle 21n is provided at a forward end portion of the heating cylinder 21 via a head portion 21e. A hopper 21h for accommodating a molding material (resin material) 21r is provided at the rear end of the heating cylinder 21. A lower end opening of the hopper 21h communicates with the interior of the heating cylinder 21 through a material drop passage.

As a result, the molding material 21r within the hopper 21h is supplied to the interior of the heating cylinder 21 through the material drop passage. A screw 22 is disposed in the heating cylinder 21 in such a manner that the screw 22 can rotate and can move forward and backward. A rear end portion of the screw 22 is coupled with a screw drive section 23. The screw drive section 23 includes a screw rotating mechanism 23r for rotating the screw 22 and a screw reciprocating mechanism 23m for advancing and retracting the screw 22. In the illustrated example, a system for driving the screw rotating mechanism 23r and the screw reciprocating mechanism 23m is an electrical system in which electric motors are used for driving them. However, the driving system may be a hydraulic system in which a hydraulic circuit is used for driving them, and no limitation is imposed on the drive system.

The screw rotating mechanism 23r and the screw reciprocating mechanism 23m are connected to a controller main body 26 provided in a molding machine controller 3. Thus, control instructions for driving and controlling the screw rotating mechanism 23r and the screw reciprocating mechanism 23m are given from the controller main body 26. Physical quantities such as the speed and position of the screw 22 are detected by a speed sensor, a position sensor, etc., which are not illustrated in the drawing, and their detection signals are given to the controller main body 26.

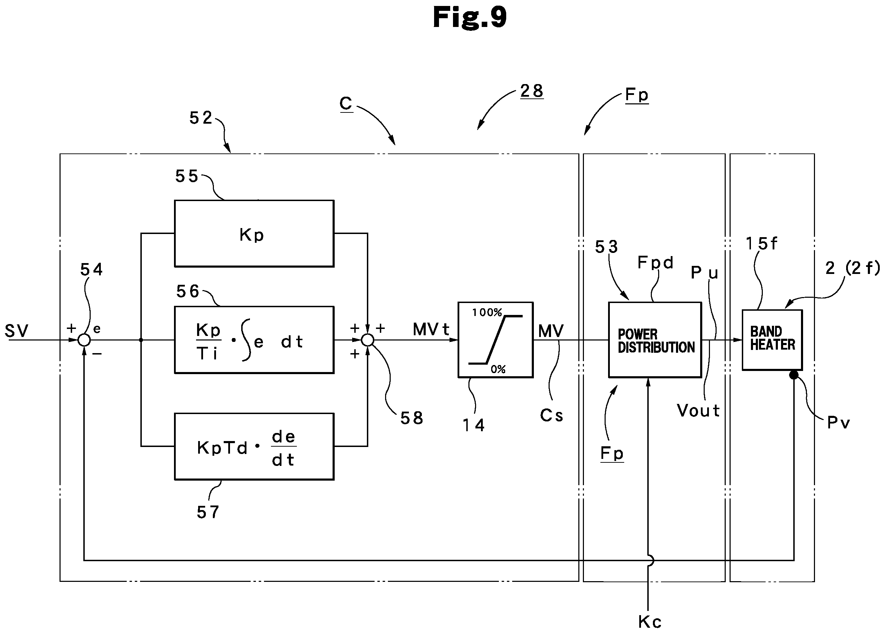

The heating cylinder 21 has a heating cylinder forward portion, a heating cylinder middle portion, a heating cylinder first rear portion, and a heating cylinder second rear portion, which are arranged in this order from the forward side toward the rearward side. A forward portion heating section 2f, a middle portion heating section 2m, a first rear portion heating section 2ra, and a second rear portion heating section 2rb, which constitute a heating means 2, are provided on the outer circumferential surfaces of the respective portions. Similarly, a nozzle heating section 2n is provided on the outer circumferential surface of the injection nozzle 21n. These heating sections 2f, 2m, 2ra, 2rb, and 2n are composed of band heaters 15f, 15m, 15ra, 15rb, and 15n and are connected to a heater driver 28. This heater driver 28 is connected to the controller main body 26. Fig. 3 shows the front view of the forward portion heating section 2f. The heater driver 28 is composed of a PID control system C shown in Fig. 9 and constitutes a main portion of a heating control apparatus 1 according to the present embodiment, which will be described later.

Thus, control instructions for the respective heating sections 2f ... 2n are given from the controller main body 26 to the heater driver 28. Their heating temperatures are detected by unillustrated temperatures sensors (thermocouples, etc.) and their detection signals are given to the heater driver 28 and the controller main body 26.

The molding machine controller 3 controls the entirety of the injection molding machine M. The molding machine controller 3 includes the above-described controller main body 26. The controller main body 26 includes pieces of hardware such as a CPU and an internal memory 3m and provides a computer function. The internal memory 3m includes a data area 3md in which various types of data, including a database, can be written, and a program area 3mp in which a comprehensive control program (software) for executing various arithmetic processes and various control processes (sequence control) is stored. Accordingly, the molding machine controller 3 includes an HMI (human machine interface) control system and a PLC (programable logic controller) control system, and a PLC program and an HMI program are stored in the internal memory 3m. Sequence operations of the injection molding machine M in various steps, monitoring of the injection molding machine M, etc. are executed by the PLC program. Setting and display of operation parameters of the injection molding machine M, display of operation monitor data of the injection molding machine M, etc. are executed by the HMI program.

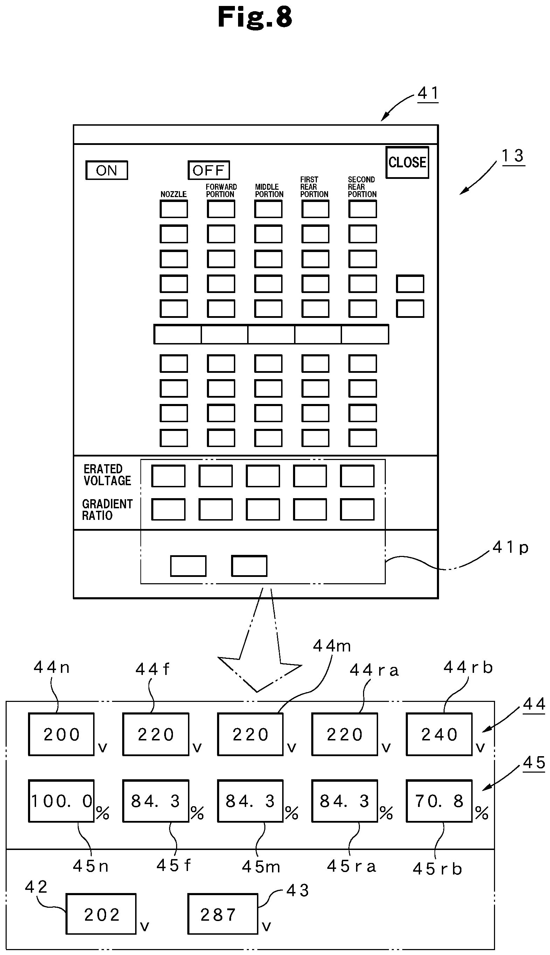

The molding machine controller 3 has a display 13 attached thereto. The display 13 can perform necessary information display. In particular, the display 13 can display a basic setting screen 41 which is associated with the heating control apparatus 1 according to the present embodiment and which is shown in Fig. 8. The display 13 has a touch panel 13t attached thereto. An operator can perform various input operations such as inputting, setting, selection, etc. by using this touch panel 13t. The molding machine controller 3, the heater driver 28, etc. constitute a drive control system Ms in the injection molding machine M.

Next, the heating control apparatus 1, which constitutes a main portion of the present invention, will be described with reference to Figs. 2 to 9.

The heating control apparatus 1 has, as a basic function, a function of adapting the injection molding machine M to a power source Po which supplies electricity to the injection molding machine M.

Specifically, the heating control apparatus 1 includes a heating means 2 and the molding machine controller 3 as basic configurational elements.

The heating means 2 is selected such that the heating means 2 is adaptable to an electric energy which permits a power source voltage expected at an arbitrary place of use. The selected heating means 2 is incorporated into the injection molding machine M.

The molding machine controller 3 includes:

an actual power source voltage obtainment functional section Fd which directly or indirectly obtains, as an actual power source voltage Vp, the power source voltage of the power source Po;

a conversion factor calculation functional section Fc which calculates, as a conversion factor Kc, an energization gradient ratio Rc on the basis of the ratio of the actual power source voltage Vp to a rated voltage Vs of the heating means 2 provided in the injection molding machine M; and

a supply power control functional section Fp having a power distribution process section Fpd which controls supply power Pu to the heating means 2 by a power distribution process of multiplying a controlled variable Cs associated with the heating means 2 by the conversion factor Kc.

The heating means 2 includes the forward portion heating section 2f, the middle portion heating section 2m, the first rear portion heating section 2ra, and the second rear portion heating section 2rb, which are attached to the above-described heating cylinder 21, and also includes the nozzle heating section 2n. As described above, the band heaters 15f, etc. are used for the heating sections 2f, etc. (see Fig. 3). In the case where, as described above, at least one band heater 15n is included in the heating means 2, since the heating means 2 can be used for heating control of the heating cylinder, which is the most important heating portion in the injection molding machine M, it is possible to contribute to stabilization of operation of the injection molding machine M and improvement of molding quality.

Conventionally, band heaters having rated voltages Vs corresponding to the power source Po are selected and used for the band heaters 15f, etc. For example, in the case where the power source Po is a three-phase AC power source having a power source voltage of 200 V, a band heater having a rated voltage Vs which matches this power source voltage of 200 V is selected.

However, in the heating control apparatus 1 according to the present embodiment, the band heaters 15f, etc. which are adaptable to an electric energy which permits a power source voltage expected at an arbitrary place of use are selected.

Hereinafter, the reasons for this selection and results of a verification test will be described. In many cases, power source voltages expected at arbitrary places of use are "200 V," "220 V," "380 V," "400 V," "420 V," "440 V," "460 V," and "480 V" (see Fig. 4).

In this case, these power sources voltages can be generally classified into a 200 V class and a 400 V class. Therefore, the following configuration is employed on the injection molding machine side. For example, in the case of the band heater 15f shown in Fig. 3, a pair of semi-circular curved band heaters 15fp and 15fq are attached to the outer circumferential surface of the heating cylinder 21 such that the band heaters 15fp and 15fq form a circle. In the case where the expected power source voltage is in the 400 V class, as indicated by broken lines Ls, terminals 36a and 36b are connected together so as to connect the band heaters 15fp and 15fq in series, and a voltage is applied between terminals 37a and 37b. In the case where the expected power source voltage is in the 200 V class, the terminals 36a and 36b are connected together and the terminals 37a and 37b are connected together so as to connect the band heaters 15fp and 15fq in parallel, and a voltage is applied between the terminals 36a and 37a. Notably, reference sign 35 denotes a fixation band, and reference sign 38c denotes a fastening device.

Accordingly, the band heaters 15f, etc. which are adaptable to an electric energy which permits the power source voltage can be selected as follows. For example, in the case where a 1000 W band heater whose rated voltage Vs is 380 V is used and the power source voltage Vp is 440 V, as will be described in detail later, an energization gradient ratio Rc becomes 75% (see Fig. 4), the electric energy consumed by the band heater can be decreased to an electric energy corresponding to 1000 W. Accordingly, this means that, even in the case where the band heaters 15f, etc. having a rated voltage Vs of 380 V are selected, a power source voltage Vp of up to 440 V is permitted. Notably, in the illustrated example, in the case where the power source voltage Vp of 440 V is used as is without multiplication by the energization gradient ratio Rc, an excessively large electric energy of 1341 W is supplied, which may cause breakage of the band heater.

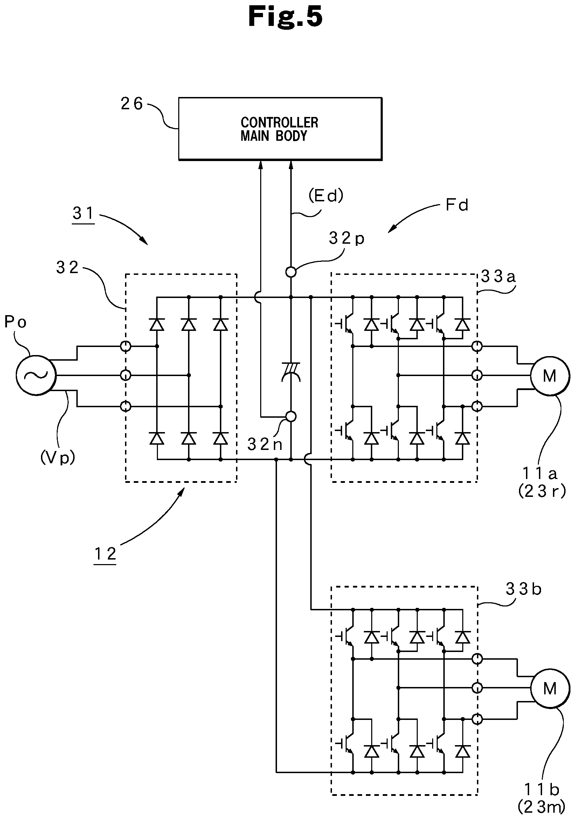

The controller main body 26 also includes the actual power source voltage obtainment functional section Fd which directly or indirectly obtains, as an actual power source voltage Vp, the power source voltage of the power source Po. Fig. 5 shows the internal circuit of a servo driver 31 (Fig. 2) as the actual power source voltage obtainment functional section Fd used in the present embodiment. A converter module 32 is provided in a front stage of the servo driver 31, and inverter modules 33a and 33b are provided in a rear stage of the servo driver 31.

The input side of the converter module 32 is connected to the power source Po, and the output sides of the inverter modules 33a and 33b are connected to actuators 11a and 11b using electric motors. These actuators 11a and 11b constitute the above-described screw rotating mechanism 23r and the above-described screw reciprocating mechanism 23m, respectively. Accordingly, the servo driver 31 constitutes the drive circuit 12 which drives the actuators 11a, etc. included in the injection molding machine M.

In the case of the illustrated example, the power source voltage (measured value) of the power source Po is a three-phase AC voltage of 202 V, and the Dc voltage Ed appearing between output portions 32p and 32n of the converter module 32 is 287 V. Lines through which this DC voltage Ed is transmitted to the controller main body 26 function as the actual power source voltage obtainment functional section Fd. As described above, the actual power source voltage obtainment functional section Fd according to the present embodiment has a function of obtaining the actual power source voltage Vp indirectly from the DC voltage Ed. Therefore, it becomes possible to obtain the actual power source voltage Vp without adding a separate voltage detection means, thereby contributing to reduction of cost and reduction of size.

The three-phase AC voltage of 202 V and the DC voltage Ed (287 V) are displayed on the screen of the display 13. Fig. 9 shows a basic setting screen 41 displayed on the display 13. A region of the basic setting screen 41 surrounded by an imaginary line is an additional display region 41p added by the heating control apparatus 1 of the present embodiment. Reference sign 42 denotes an input AC voltage display portion for displaying the three-phase AC voltage of 202 V, and reference sign 43 denotes an output DC voltage display portion for displaying the DC voltage Ed (287 V). Reference sign 44 denotes a display portion for displaying rated voltages Vs and includes voltage display portions 44f, 44m, 44ra, 44rb, and 44n for displaying the rated voltages Vs set for the above-described heating sections 2f, 2m, 2ra, 2rb, and 2n. Reference sign 45 denotes a display portion for displaying energization gradient ratios corresponding to the rated voltages Vs, respectively, and includes gradient ratio displaying portions 45f, 45m, 45ra, 45rb, and 45n which correspond to the rated voltages Vs, respectively.

In the case where, as described above, the display 13 which displays on its screen at least one of the actual power source voltage Vp, the rated voltage Vs, and the energization gradient ratio Rc is provided in the molding machine controller 3, since the operator can visually check the indirectly obtained actual power source voltage Vp, the rated voltage Vs, and the calculated energization gradient ratio Rc, it is possible to easily check without fail whether or not a proper voltage (electric power) is supplied and proper control is performed.

Meanwhile, the conversion factor calculation functional section Fc, which calculates, as the conversion factor Kc, the energization gradient ratio Rc based on the ratio of the actual power source voltage Vp to the rated voltage Vs in the injection molding machine M, is provided in the controller main body 26.

Specifically, the actual power source voltage Vp is calculated from the obtained DC voltage Ed in accordance with Formular 100.

$$Vp = Ed/\sqrt{2} \quad [V] \qquad \text{Formula 100}$$

In the above-described case, since the DC voltage Ed is 287 V, the actual power source voltage Vp is about 202 V In this manner, the power source voltage of the power source Po can be obtained (estimated) in accordance with Formular 100.

The energization gradient ratio Rc can be obtained in accordance with Formular 101. The case where the rated voltage Vs is 240 V and the actual power source voltage Vp is 202 V is considered.

$$Rc = (Vs/Vp)^2 \times 100 \ [\%] \qquad \text{Formula 101}$$

In this case, the energization gradient ratio Rc is 70.8%. In this manner, the energization gradient ratio Rc can be calculated from the actual power source voltage Vp and the rated voltage Vs. Fig. 4 shows, in the form of a list, the energization gradient ratios Rc calculated for the power source voltages of the various power sources Po mentioned above.

Also, the rated voltages Vs set for the respective heating sections 2f, 2m, 2ra, 2rb, and 2n are shown in the rated voltage display portion 44 shown in Fig. 8. In this manner, the electric energy corresponding to the rated voltage Vs used in the injection molding machine M to cope with the power source voltage can be set by the energization gradient ratio Rc. In the gradient ratio display portion 45, the calculated energization gradient ratios Rc are displayed to be related to the respective rated voltages Vs.

Meanwhile, the obtained energization gradient ratio Rc is supplied, as the conversion factor Kc, to the supply power control functional section Fp in the controller main body 26, and the controlled variable Cs associated with the heating means 2 is multiplied by the conversion factor Kc, whereby the supply power Pu to the heating means 2 can be controlled.

Fig. 9 shows a main circuit of the heater driver 28. In the illustrated example, a PID control system C serves as the supply power control functional section Fp for the band heater 15f and includes a PID circuit 52 and a power distributor 53. The PID circuit 52 includes a subtraction unit 54 which subtracts a detected temperature PV [°C] from a set temperature (command value) SV [°C] given from the controller main body 26; an integral calculation unit 56 which calculates an integral manipulated variable based on the error e obtained from the subtraction unit 54; a proportional calculation unit 55 which calculates a proportional manipulated variable based on the error e; a differential calculation unit 57 which calculates a differential manipulated variable based on the error e; an addition unit 58 which adds together the manipulated variable output from the integral calculation unit 56, the manipulated variable output from the proportional calculation unit 55, and the manipulated variable output from the derivative calculation unit 57; and an output limiter 14 which limits the manipulated variable MVt output from the addition unit 58 between an upper limit value and a lower limit value. The manipulated variable MV output from the output limiter 14 is given to the power distributor 53. Notably, this PID control system C is an ordinary known PID control system.

In this case, the output limiter 14 may be configured to have a function of limiting the conversion factor Kc not to exceed 100%. In the case where such an output limiter 14 is provided, since generation of excessively large electric power can be avoided, it is possible to avoid occurrence of problems such as breakage of the band heater, thereby protecting the injection molding machine M, and to contribute to further enhancement of safety and reliability.

The above-described conversion factor Kc is given to the power distributor 53 functioning as the power distribution process section Fpd, and a process of distributing electric power is performed by the power distributor 53. Namely, in the power distributor 53, the supply power Pu to the band heater 15f is controlled by the power distribution process of multiplying the controlled variable Cs (MV) associated with the band heater 15f (the heating means 2) by the conversion factor Kc.

The power distribution process is performed by a waveform thinning process of partially removing the AC waveform W of the power source volage on the basis of the conversion factor Kc. In the case where, as described above, the power distribution process is performed by the waveform thinning process of partially removing the AC waveform W on the basis of the conversion factor Kc, since the AC waveform W can be changed (distributed) by time division processing, the power supplied to the band heater can be easily changed without increasing the complexity and size of the control system. Also, in the case where the manipulated variable MV in the PID control system C in which predetermined PID constants are set is utilized as the controlled variable Cs, since the PID control system C for the temperature during molding is utilized, stable and reliable control can be performed.

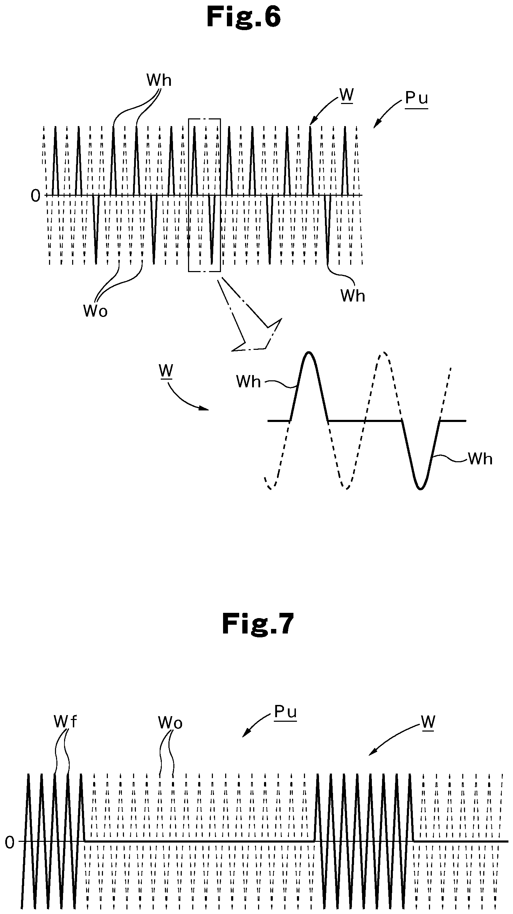

Figs. 6 and 7 show AC waveforms W distributed by the supply power control functional section Fp having the power distributor 53. The waveforms indicated by broken lines including solid lines are those in the case where the output distribution is 100%. In the illustrated example, 220 V AC power having a frequency of 50 or 60 Hz can be output as it is.

The waveform thinning process associated with Fig. 6 is for the case where the controlled variable Cs is multiplied by an energization gradient ratio Rc(N%). In this case, the supply power Pu is determined by half-waves Wh indicated by solid lines present in selected periods (N%), and half-waves Wo in the remaining periods ((100 - N) %) are removed as indicated by broken lines. The waveform thinning process associated with Fig. 7 is for the case where the controlled variable Cs is multiplied by an energization gradient ratio Rc(Q%). In this case, the supply power Pu is determined by energization in Wf periods (Q%) indicated by solid lines, and energization is stopped (i.e., energization is removed) in Wo periods ((100 - Q) %) indicated by broken lines. This control period is about 0.5 second. Notably, in either case, the start and end of each removal period can be determined freely. However, such removal is desirably performed over periods each starting from a 0 V point and ending at a 0 V point from the viewpoint of suppressing generation of unnecessary noise, etc.

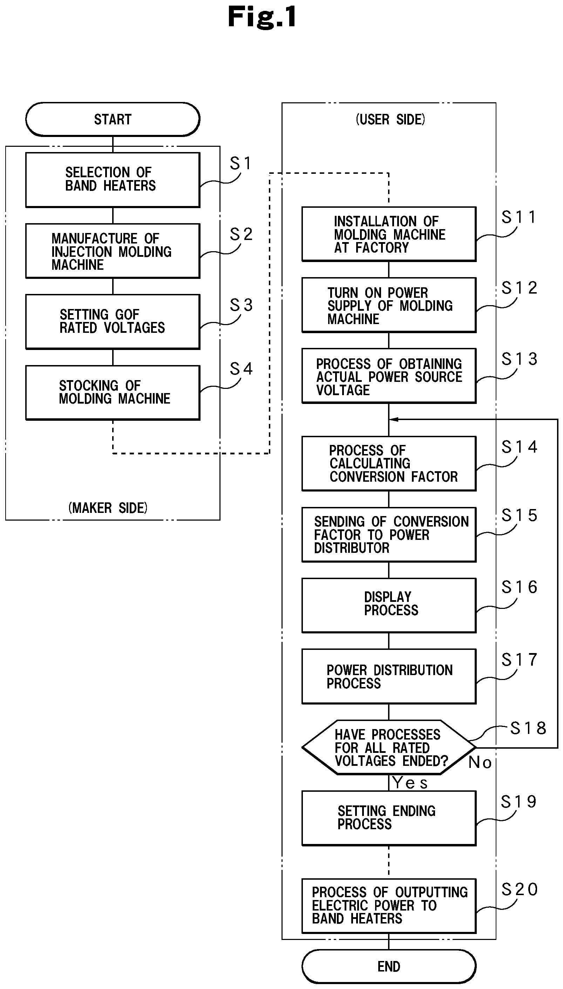

Next, the steps of the heating control method of the present embodiment will be described in accordance with the flowchart shown in Fig. 1 and with reference to the drawings.

First, on the maker side; i.e., in the step of manufacturing the injection molding machine M, the band heaters 15f, etc. which will serve as the heating means 2 which is adaptable to an electric energy which permits a power source voltage expected at an arbitrary place of use is selected (step S1). As shown in Fig. 3, the selected band heaters 15f, etc. are attached to the outer circumferential surface of the heating cylinder 21, and the entirety of the injection molding machine M is manufactured (step S2). When the injection molding machine M is completed, rated voltages (220 V, etc.) corresponding to the band heaters 15f, etc. are set (step S3). Fig. 8 shows, as one example, the additional display portion 41p of the basic setting screen 41 in which the rated voltages 220 V, etc. are set for the respective portions of the heating cylinder 21.

The setting of the rated voltages (220 V. etc.) may be performed at this point in time or may be performed after the injection molding machine M is delivered to an arbitrary installation region described below. Notably, since a specific place of use has not yet been specified, the completed injection molding machine M may be stocked in, for example, a predetermined storage warehouse, etc. (step S4).

Here, the case where a request of installing the injection molding machine M has received from a user in a certain region is assumed. In this case, of the stocked injection molding machines M, an injection molding machine of a predetermined model ordered by the user is delivered to the region on the user side and is installed at a molding factory or the like (step S11). After the installation of the injection molding machine M has ended, the injection molding machine M is connected to the power source Po, and the power supply of the injection molding machine M is turned ON (step S12).

As a result, the DC voltage Ed between the output portions 32p and 32n of the converter module 31; i.e., the actual power source voltage Vp, is obtained by the actual power source voltage obtainment functional section Fd provided in the controller main body 26 of the heating control apparatus 1 (step S13). Also, the energization gradient ratio Rc based on the ratio of the actual power source voltage Vp to the rated voltage Vs in the injection molding machine M is calculated by the conversion factor calculation functional section Fc provided in the controller main body 26 (step S14). The obtained energization gradient ratio Rc is given, as the conversion factor Kc, to the power distribution process section Fpd shown in Fig. 9; i.e., the power distributor 53 (step S15). Also, the conversion factor Kc is displayed in the additional display portion 41p shown in Fig. 8 (step S16).

In the power distributor 53, the power distribution process of distributing (reducing) electric power by multiplying the controlled variable Cs (the manipulated variable MV) associated with the heating means 2 by the conversion factor Kc is performed (step S17). As a result, the supply power (Vout) for the band heater 15f; i.e., supply power in which its AC waveform has been partially removed, is output. Although the processing steps for the band heater 15f have been described, the same process is performed for other band heaters 15m, 15ra, 15rb, and 15n.

When the processes for all the rated voltages Vs end, the setting process for the power source voltage ends (steps S18 and S19). Namely, the basic setting for adapting the injection molding machine M to the power source voltage of the power source Po for supplying electricity to the injection molding machine Mends.

As a result, during operation, the supply power having undergone the distribution process by the power distribution process section Fpd; i.e., the supply power in which its AC waveform has been partially removed, is output to the band heaters 15f, etc. (step S20).

In the heating control method and the heating control apparatus 1 for the injection molding machine according to the present embodiment, the following basic procedure is performed. The heating means 2 which is adaptable to an electric energy which permits a power source voltage expected at an arbitrary place of use is selected and is attached to the injection molding machine M in advance. When the injection molding machine M is installed at the place of use, the power source voltage of the power source Po is obtained, as the actual power source voltage Vp, directly or indirectly by the molding machine controller 3 provided in the injection molding machine M, the energization gradient ratio Rc is calculated, as the conversion factor Kc, on the basis of the ratio of the actual power source voltage Vp to the rated voltage Vs of the heating means 2 provided in the injection molding machine M, and the supply power Pu to the heating means 2 is controlled by the power distribution process of multiplying the controlled variable Cs associated with the heating means 2 by the conversion factor Kc.

Therefore, it is possible to yield the advantage effects of the power distribution process; namely, it is unnecessary to use a large-scale voltage transformation means or current transformation means, thereby facilitating control and implementation and reducing the size of the apparatus. In particular, even in a situation where, when the injection molding machine M is delivered to (installed in) any of regions in which various power source voltages are employed, mismatching occurs between the power source voltage of the power source Po and the rated voltage Vs of the heating means 2 provided in the injection molding machine M, the injection molding machine M can be installed without changing the heating means 2 such as the band heaters. Thus, it is possible to avoid the problem of consuming unnecessary installation time and the problem of incurrence of unnecessary costs. In addition, since it is only necessary to select one type of heating means with an appropriate power capacity, it is possible to attain an additional effect of increasing the degree of freedom in design and production, such as enabling stocking of pre-manufactured injection molding machines.

The preferred embodiment has been described in detail. However, the present invention is not limited to such embodiment, and, as to structures of details, shapes, raw materials, quantities, numerical values, methods, etc., alteration, addition, and deletion can be performed arbitrarily within a range not departing from the gist of the present invention.

For example, the embodiment shows the case where, when the power source voltage of the power source Po is obtained as the actual power source voltage Vp, the actual power source voltage Vp is obtained indirectly from the DC voltage Ed in the drive circuit 12. However, the actual power source voltage Vp may be directed directly. The case where the power distribution process is performed by the waveform thinning process of partially removing the AC waveform W on the basis of the conversion factor Kc has been described. However, the case of use of other known methods for changing electric energy, such as changing the period of the waveform as in PWM control is not excluded. Although the manipulated variable Cs in the PID control system with predetermined PID constant set beforehand is desirably used as the controlled variable Cs, the case where any of manipulated variables of different other control systems is used as the controlled variable Cs is not excluded. The case where at least one of the actual power source voltage Vp, the rated voltage Vs, and the energization gradient ratio Rc is displayed on the screen of the display 13 has been shown as an example. However, this is not essential. Although the output limiter 14 for limiting the conversion factor Kc not to exceed 100% is used, the case of limiting the conversion factor Kc by any of other methods is not excluded. In addition, in addition to the band heaters 15n, etc., any of various heating methods may be used for the heating means 2.

**Industrial Applicability**

The heating control method and the heating control apparatus 1 according to the present invention can be utilized, when the injection molding machine is connected to one of power sources of different regions having different power source voltages, in order to adapt the injection molding machine to the power source voltage of the power source to which the injection molding machine is connected.

**Reference Signs List**

1: heating control apparatus, 2: heating means, 3: molding machine controller, 11a ···: actuator, 12: drive circuit, 13: display, 14: output limiter, 15n ···: band heater, M: injection molding machine, Po: power source, Pu supply power, Vp:

actual power source voltage, Vs: rated voltage, Rc: energization gradient ratio, Kc: conversion factor, Cs: controlled variable, MV: manipulated variable, Fd: actual power source voltage obtainment functional section, Fc: conversion factor calculation functional section, Fpd: power distribution process section, Fp: supply power control functional section, Ed: DC voltage, W: AC waveform, Wh: half wave, Wf: full wave

**Citation List**

Patent Literature 1: JP2022-127229A

**Claims**

1.  A heating control method for an injection molding machine which adapts the injection molding machine to a power source which supplies electricity to the injection molding machine, wherein

    a heating means which is adaptable to an electric energy which permits a power source voltage expected at an arbitrary place of use is selected and is attached to the injection molding machine in advance;
    when the injection molding machine is installed at the place of use, the power source voltage of the power source is obtained, as an actual power source voltage, directly or indirectly by a molding machine controller provided in the injection molding machine, an energization gradient ratio is calculated, as a conversion factor, on the basis of the ratio of the actual power source voltage to a rated voltage of the heating means provided in the injection molding machine, and supply power to the heating means is controlled by a power distribution process of multiplying a controlled variable associated with the heating means by the conversion factor.

2.  A heating control method for an injection molding machine according to claim 1, wherein the actual power source voltage is obtained indirectly from DC voltage in a drive circuit which drives an actuator included in the injection molding machine.

3.  A heating control method for an injection molding machine according to claim 1, wherein the power distribution process is performed by a waveform thinning process of partially removing an AC waveform of the power source voltage on the basis of the conversion factor.

4.  A heating control method for an injection molding machine according to claim 3, wherein the waveform thinning process is performed by multiplying the controlled variable by the energization gradient ratio.

5.  A heating control method for an injection molding machine according to claim 1, wherein the controlled variable is a manipulated variable in a PID control system in which predetermined PID constants are set.

6.  A heating control method for an injection molding machine according to claim 1, wherein the heating means includes at least one band heater.

7.  A heating control apparatus for an injection molding machine which adapts the injection molding machine to a power source which supplies electricity to the injection molding machine, the heating control apparatus comprising:

    a heating means attached to the injection molding machine, the heating means being selected to be adaptable to an electric energy which permits a power source voltage expected at an arbitrary place of use; and
    a molding machine controller, wherein
    the molding machine controller includes:

        an actual power source voltage obtainment functional section which directly or indirectly obtains, as an actual power source voltage, a power source voltage of the power source;
        a conversion factor calculation functional section which calculates, as a conversion factor, an energization gradient ratio on the basis of the ratio of the actual power source voltage to a rated voltage of the heating means provided in the injection molding machine; and
        a supply power control functional section having a power distribution process function of controlling supply power to the heating means by a power distribution process of multiplying a controlled variable associated with the heating means by the conversion factor.

8. A heating control apparatus for an injection molding machine according to claim 6, wherein the actual power source voltage is obtained indirectly from DC voltage in a drive circuit which drives an actuator included in the injection molding machine.

9. A heating control apparatus for an injection molding machine according to claim 6, wherein the heating means includes at least one band heater.

10. 10 A heating control apparatus for an injection molding machine according to claim 6, wherein the molding machine controller has a display which displays on its screen at least one of the actual power source voltage, the rated voltage, and the energization gradient ratio.

11. A heating control apparatus for an injection molding machine according to claim 6, wherein the molding machine controller includes an output limiter which limits the conversion factor not to exceed 100%.

EP 4 570 467 A1

# Fig.1

START

SELECTION OF BAND HEATERS — S1

MANUFACTURE OF INJECTION MOLDING MACHINE — S2

SETTING GOF RATED VOLTAGES — S3

STOCKING OF MOLDING MACHINE — S4

(MAKER SIDE)

(USER SIDE)

INSTALLATION OF MOLDING MACHINE AT FACTORY — S11

TURN ON POWER SUPPLY OF MOLDING MACHINE — S12

PROCESS OF OBTAINING ACTUAL POWER SOURCE VOLTAGE — S13

PROCESS OF CALCULATING CONVERSION FACTOR — S14

SENDING OF CONVERSION FACTOR TO POWER DISTRIBUTOR — S15

DISPLAY PROCESS — S16

POWER DISTRIBUTION PROCESS — S17

HAVE PROCESSES FOR ALL RATED VOLTAGES ENDED? — S18   No

Yes

SETTING ENDING PROCESS — S19

PROCESS OF OUTPUTTING ELECTRIC POWER TO BAND HEATERS — S20

END

12

Fig.2

# Fig.3

# Fig.4

| | ACTUAL POWER SOURCE VOLTAGE V p (V) | ENERGIZATION GRADIENT RATIO R c (%) |
|---|---|---|
| A | 200 | 90 |
| B | 220 | 75 |
| C | 380 | 100 |
| D | 400 | 90 |
| E | 420 | 82 |
| F | 440 | 75 |
| G | 460 | 68 |
| H | 480 | 63 |

# Fig.5

# Fig.6

# Fig.7

# Fig.8

# Fig.9

EP 4 570 467 A1

Europäisches
Patentamt

European
Patent Office

Office européen
des brevets

# EUROPEAN SEARCH REPORT

**Application Number**

EP 24 21 4730

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/023864 A1 (OKADA NORITAKA [JP]) 31 January 2008 (2008-01-31) * paragraphs [0049], [0050], [0084] - [0096]; figures 1-15 * | 1-11 | INV. B29C45/76 |
| X | US 2009/191295 A1 (ONISHI MASASHI [JP]) 30 July 2009 (2009-07-30) * paragraphs [0072] - [0079]; figures 1-10 * | 1-3,5-9 | |
| A | JP 2005 022150 A (TOYO MACHINERY & METAL) 27 January 2005 (2005-01-27) * abstract; figures 1-10 * | 1-11 | |

**TECHNICAL FIELDS SEARCHED (IPC)**

B29C

The present search report has been drawn up for all claims

| Place of search | Date of completion of the search | Examiner |
|---|---|---|
| Munich | 4 April 2025 | Horubala, Tomasz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 4730

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| US 2008023864 A1 | 31-01-2008 | CN 101005935 A | 25-07-2007 |
| | | DE 112005002044 T5 | 18-10-2007 |
| | | JP 4589330 B2 | 01-12-2010 |
| | | JP WO2006022322 A1 | 08-05-2008 |
| | | KR 20070044030 A | 26-04-2007 |
| | | TW I268849 B | 21-12-2006 |
| | | US 2008023864 A1 | 31-01-2008 |
| | | WO 2006022322 A1 | 02-03-2006 |
| US 2009191295 A1 | 30-07-2009 | CN 1902039 A | 24-01-2007 |
| | | EP 1702741 A1 | 20-09-2006 |
| | | JP 4365828 B2 | 18-11-2009 |
| | | JP WO2005065915 A1 | 26-07-2007 |
| | | KR 20060103343 A | 28-09-2006 |
| | | TW I250074 B | 01-03-2006 |
| | | US 2009191295 A1 | 30-07-2009 |
| | | WO 2005065915 A1 | 21-07-2005 |
| JP 2005022150 A | 27-01-2005 | JP 3782075 B2 | 07-06-2006 |
| | | JP 2005022150 A | 27-01-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022127229 A